Europäisches Patentamt

European Patent Office

Office européen des brevets

(19)

(11) Publication number: **0 474 249 B1**

# EUROPEAN PATENT SPECIFICATION

(12)

(45) Date of publication of patent specification: **21.12.94**   (51) Int. Cl.5: **C08F 4/654**, C08F 4/02, C08F 10/02

(21) Application number: **91115120.7**

(22) Date of filing: **06.09.91**

(54) **Solid component of a catalyst for the (co)polymerization of ethylene.**

(30) Priority: **07.09.90 IT 2140590**

(43) Date of publication of application:
**11.03.92 Bulletin 92/11**

(45) Publication of the grant of the patent:
**21.12.94 Bulletin 94/51**

(84) Designated Contracting States:
**AT BE CH DE DK ES FR GB GR IT LI LU NL SE**

(56) References cited:
**EP-A- 0 344 755**
**EP-A- 0 358 264**
**US-A- 4 399 054**
**US-A- 4 843 049**

(73) Proprietor: **ENICHEM S.p.A.**
**Piazza Repubblica, 16**
**I-20124 Milano (IT)**

(72) Inventor: **Luciani, Luciano, Dr.**
**37, Via Mc Allister**
**I-44100 Ferrara (IT)**
Inventor: **Pondrelli, Maddalena, Dr.**
**54, Via Gramsci**
**I-40054 Budrio, Bologna (IT)**
Inventor: **Invernizzi, Renzo, Dr.**
**98, Via Primaticcio**
**I-20147 Milan (IT)**
Inventor: **Borghi, Italo, Dr.**
**49, Via Aldighieri**
**I-44100 Ferrara (IT)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

**Description**

The present invention relates to a solid component of a catalyst, the process for its preparation and its use in the polymerization of ethylene and the copolymerization of ethylene with alpha-olefins.

It is known that ethylene, or generally alpha-olefins, can be polymerized at low pressure with Ziegler-Natta type catalysts. These catalysts are usually composed of a compound of elements from subgroups IV to VI of the periodic table (transition metal compounds), mixed with an organometallic compound, or hydride, of the elements of groups I to III of the periodic table.

Catalysts are also known in the art, in which the transition metal compound is supported on a solid carrier, either organic or inorganic, and sometimes physically and/or chemically treated. Examples of such solid carriers are the oxygenated compounds of bivalent metals (such as oxides, inorganic oxygenated salts and carboxylates) or hydroxychlorides or chlorides of bivalent metals. According to US-A-3,642,746 a carrier for catalysts is a bivalent metal halide treated with an electron donor. According to US-A-4,421,674 a carrier for catalysts is a solid, smooth product obtained by spray drying of a solution of magnesium chloride in ethanol. In particular, US-A-4,421,674 specifies that microspheroidal particles of a solid such as silica can be suspended in an ethanolic solution of magnesium chloride to obtain a spherical carrier for catalysts having a nucleus composed of the microspheroidal solid and coated with a layer of activated magnesium chloride.

It has now been found that it is possible to obtain solid compounds of Ziegler-Natta catalysts on a carrier prepared from particulate (microspheroidal) silica and a solution of magnesium chloride in ethanol, using a simple and convenient procedure which not only overcomes the difficulties and complications involved in spray drying, but also produces solid catalyst components having a surprisingly improved catalytic activity in the (co)polymerization of ethylene.

Accordingly, the present invention provides a process for the preparation of a solid component of a catalyst for the homopolymerization of ethylene or the copolymerization of ethylene and one or more alpha-olefins, comprising a carrier of silica in the form of particles (50 to 90% by weight) and a catalytically active portion (50 to 10% by weight) including titanium, magnesium, chlorine and also alkoxy groups. Said process comprises the following steps:

(a) preparing a solution of magnesium chloride in ethanol;

(b) impregnating activated silica in the form of particles by using the solution prepared in step (a) and suspending the silica particles in said solution;

(c) adding at least one titanium compound selected from alkoxides and halogen-containing alkoxides of titanium (optionally in combination with titanium tetrahalides such as $TiCl_4$) and at least one silicon halide to the suspension of step (b), the atomic ratio of magnesium in the magnesium chloride to titanium ranging from 2.0/1 to 12.1/1 and the ratio of silicon atoms to alkoxy groups in the alkoxide and/or halogen-containing alkoxide of titanium ranging from 0.1/1 to 4.0/1;

(d) eliminating the ethanol from the suspension obtained in step (c) by evaporation, to recover a solid matter;

(e) reacting the solid matter obtained in step (d) with an alkyl aluminum chloride, the atomic ratio of chlorine atoms in the alkyl aluminum chloride to the alkoxy groups in the alkoxide and/or halogen-containing alkoxide of tita-nium ranging from 0.5/1 to 7.0/1; and

(f) recovering the solid catalyst component.

A solution of magnesium chloride in ethanol is prepared in step (a) of the claimed process. For this purpose, it is preferable to use exclusively or almost exclusively anhydrous magnesium chloride, "almost exclusively" referring to a water content which is lower than 5% by weight.

Similarly, the ethanol is preferably anhydrous or has an only low water content (preferably less than 5% by weight). The dissolution of the magnesium chloride can take place at room temperature (about 20 to about 25°C) or at higher temperatures up to the reflux point of the ethanol at atmospheric pressure. The preferred operating temperature is about 60°C. The resulting ethanol solution preferably has a concentration of magnesium chloride of from 1 to 15% by weight.

In step (b) of the process of the present invention silica in the form of particles is impregnated with the solution prepared in step (a) by suspending the silica particles in said solution.

The most suitable silica for this purpose is a microspheroidal, porous silica having a particle size ranging from 10 to 100 $\mu$m, a $SiO_2$ content of >90% by weight, a surface area ranging from 250 to 400 m²/g, a pore volume ranging from 1.3 to 1.8 ml/g and an average diameter of the pores ranging from 20 to 30 nm. This silica is preferably activated before being impregnated. Said activation can be carried out, e.g., by heating the silica in an inert atmosphere, at a temperature of from 100 to 650°C for 1 to 20 hours, or by contacting the silica with an organometallic compound, such as an alkyl magnesium or an alkyl aluminum compound, preferably selected from butyl magnesium, octyl butyl magnesium, triethyl aluminum and mixtures thereof, operating at room temperature or at higher temperatures, for example at about 60°C. It is preferable to activate the silica by treatment with octyl butyl magnesium, particularly in quantities of 10 to 20% by weight of silica.

The impregnation is preferably carried out by suspending from 10 to 20 parts by weight of silica per 100 parts by volume of the ethanolic solution of magnesium chloride. The contact between said components is generally maintained, if necessary under slight stirring, at a temperature which is brought from room temperature (20 to 25°C) to the approximate boiling point of the ethanol, preferably to 50 to 65°C, over a period of from 0.5 to 2.0 hours.

According to the present invention, in step (c) of the present process, at least one titanium compound selected from alkoxides and halogen-containing alkoxides of titanium and a silicon halide are added to the suspension of step (b), the atomic ratio of magnesium in the magnesium chloride to titanium ranging from 2.0/1 to 12.1/1 and the ratio of silicon atoms to alkoxy groups in the alkoxide and/or halogen-containing alkoxide of titanium ranging from 0.1/1 to 4.0/1.

The titanium compounds most suited for this purpose are alkoxides and chloroalkoxides of titanium, preferably containing from 1 to 4 carbon atoms in the alkoxide portion(s). Specific examples of these compounds are titanium tetra-n-propylate, titanium tetra-n-butylate, titanium tetra-i-propylate, titanium tetra-i-butylate and the corresponding titanium mono- and di-chloroalkoxides. These alkoxides can be mixed with titanium tetrachloride. It is, however, more preferable to use a mixture of titanium tetrachloride and a titanium tetraalkoxide, preferably selected from those listed above, the molar ratio of the former to the latter being about 1/3.

In accordance with the present invention, a silicon halide is also added to the suspension of step (b). Said silicon halide is preferably chosen from silicon tetrahalides and halosilanes (preferably chlorosilanes). Specific examples of these compounds are silicon tetrachloride, trichlorosilane, vinyl trichlorosilane, trichloroethoxy silane and chloroethyl trichlorosilane. Silicon tetrachloride is particularly preferred.

In step (c) of the process of the present invention it is also preferable to employ an atomic ratio of magnesium to titanium of from 3.5/1 to 8.5/1 and/or a ratio of the silicon atoms to the alkoxy groups of from 0.5/1 to 4.0/1.

According to a specific embodiment of the present invention, a compound of zirconium and/or hafnium, chosen from halides, particularly tetrachlorides, alkoxides and halogen alkoxides, particularly chloroalkoxides, is also added to the suspension of step (b), preferably in such quantities as to result in an atomic ratio of titanium to zirconium and/or hafnium of from 0.5/1 to 2.0/1. Thereby a solid catalyst component which is particularly useful in the production of ethylene polymers with a broad molecular weight distribution is obtained.

In step (c) of the present process there is no specific order of addition for the compounds of titanium, silicon and, if any, zirconium and/or hafnium. However, this addition is preferably carried out by keeping the resulting suspension at a temperature of from room temperature (about 20 to about 25°C) to 100°C, over a period of from 0.5 to 3 hours, particularly at a temperature of about 60°C for about 1 hour.

In step (d) of the present process, the ethanol is eliminated from the suspension obtained in step (c) by means of evaporation. This evaporation is advantageously carried out by distilling the ethanol at atmospheric pressure or at reduced pressure and finally drying the solid for 0.5 to 2 hours at a temperature of about 120°C, under a pressure of 5 to 10 mm Hg.

In step (e) of the present process the solid obtained in step (d) is reacted with an alkyl aluminum chloride, the atomic ratio of the chlorine atoms of the aluminum compound to the alkoxy groups of the alkoxide and/or halogen-containing alkoxide of titanium ranging from 0.5/1 to 7.0/1.

More specifically, in step (e) the solid is preferably suspended in an inert hydrocarbon liquid such as hexane or heptane, and is contacted with an alkyl aluminum chloride, usually selected from diethyl aluminum chloride, ethyl aluminum sesquichloride, diisobutyl aluminum chloride, isobutyl aluminum dichloride and mixtures thereof, dissolved in the above hydrocarbon solvent or a different hydrocarbon solvent. This operation is carried out at a temperature generally ranging from 10 to 100°C for a period which, mainly depending on the chosen operating temperature, can vary from 10 minutes to 24 hours. The atomic ratio of chlorine to titanium in the solid usually ranges from 10/1 to 40/1. The preferred operating temperature is from 20 to 90°C, for a period of from 10 minutes to 1 hour, and the preferred ratio of chlorine atoms to titanium in the solid is from 12/1 to 36/1. This treatment has the effect of increasing the chlorine content in the solid catalyst component with a simultaneous reduction, either partial or complete, of the titanium from the tetravalent state to the trivalent state, and the partial or total elimination of the alkoxy groups present.

At the end of the present process, the solid catalyst component is recovered in step (f), is preferably washed with a liquid aliphatic hydrocarbon solvent, such as hexane or heptane, until the chlorides have been eliminated from the washing liquid, and is finally dried.

The solid catalyst component obtainable according to the process of the present invention comprises a particulate silica carrier (50 to 90% by weight) and a catalytically active portion (50 to 10% by weight) including titanium, magnesium and chlorine, and also alkoxy groups, preferably with the following atomic ratios: Mg/Ti from 2.0/1 to 12.1/1; Cl/Ti from 10/1 to 40/1, alkoxy groups/Ti from 0/1 to 20/1. The alkoxy groups include ethoxy groups originating from the ethanol and alkoxy groups deriving from the titanium alkoxide used. The quantity of titanium in the catalyst component generally varies from 0.5 to 5.0% by weight. The solid catalyst component preferably comprises a particulate silica carrier (55 to 80% by weight) and a catalytically active portion (45 to 20% by weight) containing titanium, magnesium, chlorine and alkoxy groups, with the following atomic ratios: Mg/Ti from 3.5/1 to 8.5/1; Cl/Ti from 12/1 to 36/1, alkoxy groups/Ti from 2/1 to 10/1. In this catalyst component the amount of titanium generally varies from 0.8 to 2.0% by weight.

When zirconium and/or hafnium is present in the solid catalyst component, the atomic ratio of titanium to zirconium and/or hafnium usually ranges form 0.5/1 to 2.0/1.

The present invention also provides a catalyst for the (co)polymerization of ethylene, comprising the above-mentioned solid catalyst component combined with an organometallic aluminum compound (co-catalyst) preferably chosen from aluminum trialkyls and alkyl aluminum halides (particularly chlorides), containing from 1 to 5 carbon atoms in the alkyl groups. Among these preferred are aluminum trialkyls with from 2 to 4 carbon atoms in the alkyl groups, such as triethyl aluminum, tributyl aluminum and triisobutyl aluminum. The catalyst of the present invention has an atomic ratio of aluminum (in the co-catalyst) to titanium (in the solid catalyst component) which generally ranges from 20:1 to 250:1, preferably from 100:1 to 200:1.

This catalyst is extremely active in processes for the homopolymerization of ethylene and the copolymerization of ethylene with alpha-olefins. The use of silicon halide, under the conditions described above, is essential for obtaining this activity, as can be seen from the examples which follow. In particular, it has been found that the silicon halide makes the solid catalyst component highly active even when there is a high content of alkoxy groups and also in the case of solid catalyst components containing zirconium and/or hafnium in addition to titanium.

The catalyst of the present invention can be used in polymerization processes carried out, e.g., by means of the suspension technique in an inert diluent or by using a gas phase, in a fluidized or stirred bed. The alpha-olefins which can be copolymerized with ethylene are generally those which contain from 3 to 10 carbon atoms, preferably from 4 to 6 carbon atoms, such as butene-1, hexene-1 and 4-methyl-pentene-1. The general polymerization conditions are: temperature from 50 to 100°C, total pressure from 5 to 40 bar, with a ratio of the partial pressure of hydrogen to that of ethylene of from 0 to 10. There is, at any rate, a high productivity in the polymerization process and the polymer thus obtained has excellent rheological properties and, in particular, is in the form of granules which are nonfriable and without fines.

In the following non-limitative examples which are intended to provide a better understanding of the present invention, a microspheroidal silica carrier is used, said carrier having a particle size ranging from 20 to 60 $\mu$m a $SiO_2$ content of >99% by weight, a surface area of 320 $m^2$/g, a pore volume of 1.65 ml/g and an average pore diameter of from 25 to 26 nm.

EXAMPLE 1 (comparison)

4.5 g (47.3 mmoles) of anhydrous magnesium chloride and 100 ml of absolute ethanol dried over aluminum are charged into a 250 ml flask equipped with reflux cooler, mechanical stirrer and thermometer.The mixture is heated to 60°C for 30 minutes to allow the complete dissolution of the magnesium chloride.

15 g of microspheroidal silica, previously activated by contacting it for 30 minutes, at 60°C, with a solution containing 17 ml of 20% by weight of octyl butyl magnesium in heptane and 150 ml of n-hexane, are suspended in the ethanolic solution prepared. The resulting suspension is kept at a temperature of 60°C for 30 minutes.

2.4 g (7.05 mmoles) of titanium tetrabutylate and 0.445 g (2.35 mmoles) of titanium tetrachloride are adeed to the suspension and contact is maintained at 60°C for 1 hour.

The resultant mixture is then dried by evaporating the solvent and the solid recovered is heated under vacuum (5 to 10 mm Hg) at a temperature of 120°C for 1 hour.

12 g of the solid thus obtained are suspended in 40 ml of anhydrous n-hexane, and 9.6 ml of a 40% by weight solution of ethyl aluminum sesquichloride (3.23 g; 13.03 mmoles) in n-decane are added to the resulting suspension. Contact is maintained for 15 minutes at a temperature of 25 °C. The resulting solid is then recovered by filtration, washed with anhydrous n-hexane until all the chlorides in the washing liquid have been eliminated, and finally dried by evaporating the solvent.

About 10 g of a solid catalyst component are thus obtained, in solid granule form, containing 58% by weight of silica and having a ratio Mg:Ti:Cl:alkoxy groups of 7.2:1.0:16.6:9.4.

The solid catalyst component prepared in the above way is used in a test for the polymerization of ethylene. More specifically, the polymerization is carried out in a 5 liter autoclave containing 2 litres of n-hexane. The process is carried out at a pressure of 15 bar in the presence of hydrogen, with a ratio of the pressure of hydrogen to that of ethylene of 0.47/1, at a temperature of 90 °C and over a period of 2 hours, using 100 mg of the solid catalyst component and triethyl aluminum as co-catalyst, the atomic ratio of aluminum in the co-catalyst to titanium in the solid catalyst component being 190/1.

A yield equal to 2.4 kg of polyethylene per gram of solid catalyst component is thus obtained, said polyethylene having the following characteristics:

```
-    density:                                      0.9595 g/ml
     (ASTM D-1505)
-    MFI (2.16 kg):                                1.38   g/10'
     (Melt-Flow Index -ASTM D-1238)
-    apparent density:                             0.315  g/ml
     (ASTM D-1895)
-    MFR:                                          30.0
     (MFR = Melt-Flow Index Ratio, defined as the ratio MFI
     (21.6 kg)/MFI (2.16 kg)).
```

The polyethylene is in granule form with the following size distribution in $\mu$m:

| | |
|---|---|
| ≥2000 | 0.1% |
| <2000 to ≥1000 | 6.9% |
| <1000 to ≥500 | 77.0% |
| <500 to ≥250 | 14.0% |
| <250 | 2.0% |

EXAMPLE 2 (comparison)

4.5 g (47.3 mmoles) of anhydrous magnesium chloride and 100 ml of absolute ethanol dried over aluminum are charged, in a nitrogen atmosphere, into a 250 ml flask equipped with reflux cooler, mechanical stirrer and thermometer. The mixture is heated to 60 °C for 30 minutes to allow the complete dissolution of the magnesium chloride.

15 g of microspheroidal silica, previously activated by contacting it for 30 minutes at 60 °C with a solution containing 17 ml of 20% by weight butyl octyl magnesium in heptane and 150 ml of n-hexane, are suspended in the solution thus obtained. The suspension is kept at a temperature of 60 °C for 30 minutes.

2.4 g (7.05 mmoles) of titanium tetrabutylate and 0.445 g (2.35 mmoles) of titanium tetrachloride are then added to the suspension and contact is maintained at 60 °C for 1 hour.

The resulting suspension is then dried by evaporating the solvent and a solid is recovered, which is heated under vacuum (5 to 10 mm Hg) at a temperature of 120 °C for 1 hour.

12 g of the solid thus obtained are suspended in 40 ml of anhydrous n-hexane, and 19.2 ml of a 40% by weight solution of ethyl aluminum sesquichloride in n-decane (6.45 g; 26.06 mmoles) are added to the resulting suspension. Contact is maintained for 1 hour at a temperature of 65 °C. The solid is then recovered by filtration, washed with anhydrous n-hexane until all the chlorides in the washing liquid have been eliminated, and finally dried by evaporation of the solvent.

About 10 g of a solid catalyst component are thus obtained, in solid granule form, containing 56% by weight of silica and having a ratio Mg:Ti:Cl:alkoxy groups of 6.3:1.0:18.9:6.0.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar in the presence of hydrogen, with a ratio of the pressure of hydrogen to that of ethylene of 0.47/1, at a temperature of 90°C over a period of 2 hours, using 100 mg of the solid catalyst component and triethyl aluminum as co-catalyst, the atomic ratio of aluminum in the co-catalyst to titanium in the solid catalyst component being 180/1.

A yield equal to 4.2 kg of polyethylene per gram of solid catalyst component is obtained, said polyethylene having the following characteristics:

```
–    density:              0.9606  g/ml
–    MFI (2.16 kg)         2.16    g/10'
–    apparent density:     0.30    g/ml
–    MFR:                  31
```

The polyethylene is in granule form with the following size distribution in $\mu$m:

| ≧2000 | 8.4% |
|---|---|
| <2000 to ≧1000 | 19.9% |
| <1000 to ≧500 | 63.7% |
| <500 to ≧250 | 6.9% |
| <250 | 1.1% |

EXAMPLE 3

4.5 g (47.3 mmoles) of anhydrous magnesium chloride and 100 ml of absolute ethanol dried over aluminum are charged, in a nitrogen atmosphere, into a 250 ml flask equipped with reflux cooler, mechanical stirrer and thermometer. The mixture is heated to 60°C for 30 minutes to allow the complete dissolution of the magnesium chloride.

15 g of microspheroidal silica, previously activated by contacting it for 30 minutes, at 60°C, with a solution containing 17 ml of 20% by weight butyl octyl magnesium in heptane and 150 ml of n-hexane, are suspended in the solution thus obtained. The suspenison is kept at a temperature of 60°C for 30 minutes.

2.4 g (7.05 mmoles) of titanium tetrabutylate, 0.445 g (2.35 mmoles) of titanium tetrachloride and 3.3 ml (4.84 g, 28.52 mmoles) of silicon tetrachloride are then added to the suspension and contact is maintained at 60°C for 1 hour.

The resulting mixture is then dried by evaporating the solvent and a solid is recovered, which is heated under vacuum (5 to 10 mm Hg) at a temperature of 120°C for 1 hour.

13.5 g of the solid thus obtained are suspended in 50 ml of anhydrous n-hexane, and 12.7 ml of a 40% by weight solution of ethyl aluminum sesquichloride in n-decane (4.03 g; 16.29 mmoles) are added to the resulting suspension. Contact is maintained for 15 minutes at a temperature of 25°C. The solid is then recovered by filtration, washed with anhydrous n-hexane until all the chlorides in the washing liquid have been eliminated, and finally dried by evaporation of the solvent.

12 g of a solid catalyst component are thus obtained, in solid granule form, containing 62% by weight of silica and having a ratio Mg:Ti:Cl:alkoxy groups of 7.2:1.0:18.9:5.4.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar in the presence of hydrogen, with a ratio of the pressure of hydrogen to that of ethylene of 0.47/1, at a temperature of 90°C, over a period of 2 hours, using 50 mg of the solid catalyst component and triethyl aluminum as co-catalyst, the atomic ratio of aluminum in the co-catalyst to titanium in the solid catalyst component being 200/1.

A yield equal to 10.4 kg of polyethylene per gram of solid catalyst component is obtained, said polyethylene having the following characteristics:

```
      –    density:              0.9589  g/ml
      –    MFI (2.16 kg)         2.2     g/10'
      –    apparent density:     0.28    g/ml
      –    MFR:                  29.9
```

The polyethylene is in granule form with the following size distribution in $\mu$m:

| | |
|---|---|
| ≥2000 | 4.1% |
| <2000 to ≥1000 | 31.2% |
| <1000 to ≥500 | 52.2% |
| <500 to ≥250 | 8.1% |
| <250 | 4.4% |

EXAMPLE 4 (comparison)

4.5 g (47.3 mmoles) of anhydrous magnesium chloride and 100 ml of absolute ethanol dried over aluminum are charged, in a nitrogen atmosphere, into a 250 ml flask equipped with reflux cooler, mechanical stirrer and thermometer. The mixture is heated to 60°C for 30 minutes to allow the complete dissolution of the magnesium chloride.

15 g of microspheroidal silica, previously activated by contacting it for 30 minutes, at 60°C, with a solution containing 17 ml of 20% by weight butyl octyl magnesium in heptane and 150 ml of n-hexane, are suspended in the solution thus obtained. The suspenison is kept at a temperature of 60°C for 30 minutes.

3.20 g (9.40 mmoles) of titanium tetrabutylate and 3.60 g (9.38 mmoles) of zirconium tetrabutylate are then added to the suspension and contact is maintained at 60°C for 1 hour.

The resulting mixture is then dried by evaporating the solvent and a solid is recovered, which is heated under vacuum (5 to 10 mm Hg) at a temperature of 120°C for 1 hour.

11 g of the solid thus obtained are suspended in 100 ml of anhydrous n-hexane, and 30 ml of a 40.5% by weight solution of isobutyl aluminum dichloride in n-hexane (9.72 g; 62.7 mmoles) are added to the resulting suspension. Contact is maintained for 1 hour at a temperature of 65°C. The solid is then recovered by filtration, washed with anhydrous n-hexane until all the chlorides in the washing liquid have been eliminated, and finally dried by evaporation of the solvent.

10 g of a solid catalyst component are thus obtained, in solid granule form, containing 53.5% by weight of silica and having a ratio Mg:Ti:Zr:Cl:alkoxy groups of 6.5:1.0:1.0:24.8:4.1.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar in the presence of hydrogen, with a ratio of the pressure of hydrogen to that of ethylene of 0.47/1, at a temperature of 90°C, over a period of 2 hours, using 150 mg of the solid catalyst component and triethyl aluminum as co-catalyst, the atomic ratio of aluminum in the co-catalyst to titanium in the solid catalyst component being 140/1.

A yield equal to 4.1 kg of polyethylene per gram of solid catalyst component is obtained, said polyethylene having the following characteristics:

```
      –    density:              0.9636  g/ml
      –    MFI (2.16 kg)         2.9     g/10'
      –    apparent density:     0.30    g/ml
      –    MFR:                  37.8
```

The polyethylene is in granule form with the following size distribution in μm:

| | |
|---|---|
| ≥2000 | 0.1% |
| <2000 to ≥1000 | 26.7% |
| <1000 to ≥500 | 64.7% |
| <500 to ≥250 | 7.4% |
| <250 | 1.1% |

EXAMPLE 5

4.5 g (47.3 mmoles) of anhydrous magnesium chloride and 100 ml of absolute ethanol dried over aluminum are charged, in a nitrogen atmosphere, into a 250 ml flask equipped with reflux cooler, mechanical stirrer and thermometer. The mixture is heated to 60°C for 30 minutes to allow the complete dissolution of the magnesium chloride.

15 g of microspheroidal silica, previously activated by contacting it for 30 minutes, at 60°C, with a solution containing 17 ml of 20% by weight butyl octyl magnesium in heptane and 150 ml of n-hexane, are suspended in the solution thus obtained. The suspenison is kept at a temperature of 60°C for 30 minutes.

3.20 g (9.40 mmoles) of titanium tetrabutylate, 3.60 g (9.38 mmoles) of zirconium tetrabutylate and 8.0 ml (11.74 g, 69.13 ml) of silicon tetrachloride are then added to the suspension and contact is maintained at 60°C for 1 hour.

The resulting mixture is then dried by evaporating the solvent and a solid is recovered, which is heated under vacuum (5 to 10 mm Hg) at a temperature of 120°C for 1 hour.

18.6 g of the solid thus obtained are suspended in 100 ml of anhydrous n-hexane and 37 ml of a 40.5% by weight solution of isobutyl aluminum dichloride in n-hexane (11.9 g; 77.34 mmoles) are added to the resulting suspension. Contact is maintained for 1 hour at a temperature of 65°C. The solid is then recovered by filtration, washed with anhydrous n-hexane until all the chlorides in the washing liquid have been eliminated, and finally dried by evaporation of the solvent.

About 17 g of a solid catalyst component are thus obtained, in solid granule form, containing 50% by weight of silica and having a ratio Mg:Ti:Zr:Cl:alkoxy groups of 8.2:1.0:1.0:36.2: 17.1.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar in the presence of hydrogen, with a ratio of the pressure of hydrogen to that of ethylene of 0.47/1, at a temperature of 90°C, over a period of 2 hours, using 50 mg of the solid catalyst component and triethyl aluminum as co-catalyst, the atomic ratio of aluminum in the co-catalyst to titanium in the solid catalyst component being 200/1.

A yield equal to 11 kg of polyethylene per gram of solid catalyst component is obtained, said polyethylene having the following characteristics:

```
–    density:              0.9591  g/ml
–    MFI (2.16 kg)         1.22     g/10'
–    apparent density:     0.23    g/ml
–    MFR:                  35.1
```

The polyethylene is in granule form with the following size distribution in μm:

| | |
|---|---|
| ≥2000 | 6.6% |
| <2000 to ≥1000 | 40.0% |
| <1000 to ≥500 | 42.7% |
| <500 to ≥250 | 8.4% |
| <250 | 2.3% |

## Claims

1. Process for the preparation of a solid component of a catalyst for the homopolymerization of ethylene or the copolymerization of ethylene and one or more alpha-olefins, comprising a carrier of particulate silica (50 to 90% by weight) and a catalytically active portion (50 to 10% by weight) including titanium, magnesium, chlorine and alkoxy groups, said process comprising the steps of

   (a) preparing a solution of magnesium chloride in ethanol;

   (b) impregnating activated particulate silica with the solution prepared in step (a) by suspending the silica particles in said solution;

   (c) adding at least one titanium compound selected from alkoxides and halogen-containing alkoxides of titanium and a silicon halide to the suspension of step (b), the atomic ratio of magnesium in the magnesium chloride to titanium ranging from 2.0/1 to 12.1/1 and the ratio of silicon atoms to alkoxy groups of the titanium compound ranging from 0.1/1 to 4.0/1;

   (d) eliminating the ethanol from the suspension obtained in step (c) by evaporation, to recover a solid;

   (e) reacting the solid obtained in step (d) with at least one alkyl aluminum chloride, the atomic ratio of chlorine atoms in the alkyl aluminum chloride to the alkoxy groups in the titanium compound ranging from 0.5/1 to 7.0/1; and

   (f) recovering the solid catalyst component.

2. Process according to claim 1, wherein in step (a) an ethanol solution with a concentration of magnesium chloride of from 1 to 15% by weight is prepared.

3. Process according to any one of claims 1 and 2, wherein in step (b) there is employed a microspheroidal silica having a particle size of from 10 to 100 $\mu$m a $SiO_2$ content of >90% by weight, a surface area of from 250 to 400 $m^2$/g, a pore volume ranging from 1.3 to 1.8 ml/g and an average diameter of the pores ranging from 20 to 30 nm, said silica having been activated by heating in an inert atmosphere, at a temperature of from 100 to 650°C for 1 to 20 hours, or by contacting the silica with an organometallic compound, such as a alkyl magnesium or alkyl aluminum compound, preferably butyl magnesium, butyl octyl magnesium and/or triethyl aluminum, operating at room temperature or elevated temperatures, preferably at about 60°C.

4. Process according to any one of claims 1 to 3, wherein in step (b) from 10 to 20 parts by weight of silica per 100 parts by volume of the ethanolic solution of magnesium chloride are suspended and contact is maintained at a temperature which is brought from room temperature to the approximate boiling point of the ethanol, preferably to 50 to 65°C, for 0.5 to 2.0 hours.

5. Process according to any one of claims 1 to 4, wherein the titanium compounds used in step (c) are alkoxides and/or chloroalkoxides of titanium, containing from 1 to 4 carbon atoms in the alkoxide portion, preferably selected from titanium tetra-n-propylate, titanium tetra-n-butylate, titanium tetra-i-propylate, titanium tetra-i-butylate, the corresponding titanium mono- and di-chloroalkoxides; and mixtures thereof.

6. Process according to any one of claims 1 to 4, wherein in step (c) a mixture of titanium tetrachloride and at least one titanium tetraalkoxide as defined in claim 5, the molar ratio of the former to the latter being preferably about 1/3, is used.

7. Process according to any one of claims 1 to 6, wherein the silicon halide employed in step (c) is selected from silicon tetrahalides and halosilanes, preferably from silicon tetrachloride, trichlorosilane, vinyl trichlorosilane, trichloroethoxy silane, chloroethyl trichlorosilane and mixtures thereof.

8. Process according to any one of claims 1 to 7, wherein step (c) is carried out with an atomic ratio of magnesium to titanium of from 3.5/1 to 8.5/1 and/or a ratio of the silicon atoms to the alkoxy groups of from 0.5/1 to 2.0/1.

9. Process according to any one of claims 1 to 8, wherein a zirconium and/or hafnium compound selected from the corresponding halides, preferably tetrachlorides, alkoxides and halogen-containing alkoxides, preferably chloroalkoxides, is added in step (c), in quantities such as to result in an atomic ratio of titanium to zirconium and/or hafnium of from 0.5/1 to 2.0/1.

10. Process according to any one of claims 1 to 9, wherein the operating temperature in step (c) ranges from room temperature to 100°C for from 0.5 to 3 hours, and preferably is about 60°C for about 1 hour.

11. Process according to any one of claims 1 to 10, wherein in step (d) the ethanol is eliminated by means of evaporation at atmospheric or reduced pressure and the solid is dried for 0.5 to 2 hours, preferably at a temperature of about 120°C and under a pressure of 5 to 10 mm Hg.

12. Process according to any one of claims 1 to 11, wherein in step (e) an inert hydrocarbon solvent and a temperature ranging from 10 to 100°C for 10 minutes to 24 hours are used.

13. Process according to any one of claims 1 to 12, wherein the alkyl aluminum chloride employed in step (e) is selected from diethyl aluminum chloride, ethyl aluminum sesquichloride, diisobutyl aluminum chloride, isobutyl aluminum dichloride and mixtures thereof and a temperature of from 20 to 90°C is employed for 10 minutes to 1 hour.

14. Solid catalyst component, obtainable by the process according to any one of claims 1 to 13.

15. Solid catalyst component according to claim 14, having the following atomic ratios: Mg/Ti from 2.0/1 to 12.1/1 and preferably from 3.5/1 to 8.5/1; Cl/Ti from 10/1 to 40/1 and preferably from 12/1 to 36/1; alkoxy groups/Ti from 0/1 to 20/1 and preferably from 2/1 to 10/1; and showing a titanium content of from 0.5 to 5.0% by weight, preferably 0.8 to 2.0% by weight, with respect to the weight of said solid component.

16. Solid catalyst component according to any one of claims 14 and 15, comprising from 55 to 80% by weight of silica and from 45 to 20% by weight of catalytically active portion.

17. Solid catalyst component according to any one of claims 14 to 16, containing zirconium and/or hafnium, the atomic ratio of titanium to zirconium and/or hafnium ranging from 0.5/1 to 2.0/1.

18. Catalyst for the homopolymerization of ethylene or the copolymerization of ethylene and one or more alpha-olefins, comprising the solid catalyst component according to any one of claims 14 to 17 and an aluminum compound as co-catalyst, preferably selected from aluminum trialkyls and alkyl aluminum chlorides containing from 1 to 5, particularly from 2 to 4 carbon atoms in the alkyl groups, the atomic ratio of aluminum in the aluminum compound to titanium in the solid catalyst component preferably ranging from 20:1 to 250:1, particularly from 100:1 to 200:1.

19. Process for the homopolymerization of ethylene or the copolymerization of ethylene and one or more alpha-olefins, wherein the catalyst according to claim 18 is used.

**Patentansprüche**

1. Verfahren zur Herstellung einer festen Komponente eines Katalysators für die Homopolymerisation von Ethylen oder die Copolymerisation von Ethylen und einem oder mehreren alpha-Olefinen, umfassend einen Träger aus teilchenförmigem Siliciumdioxid (50 bis 90 Gewichts-%) und einen katalytisch aktiven Teil (50 bis 10 Gewichts-%), der Titan, Magnesium, Chlor und Alkoxygruppen einschließt, wobei das Verfahren die folgenden Stufen umfaßt:
   (a) Herstellung einer Lösung von Magnesiumchlorid in Ethanol;
   (b) Imprägnierung von aktiviertem teilchenförmigem Siliciumdioxid mit der in Stufe (a) hergestellten Lösung durch Suspendierung der SiliciumdioxidTeilchen in der Lösung;
   (c) Zugabe mindestens einer aus Alkoxiden und Halogen enthaltenden Alkoxiden von Titan ausgewählten Titan-Verbindung und eines Siliciumhalogenids zur Suspension von Stufe (b), wobei das Atomverhältnis von Magnesium im Magnesiumchlorid zu Titan im Bereich von 2,0/1 bis 12,1/1 liegt und das Verhältnis von Siliciumatomen zu Alkoxygruppen der Titan-Verbindung im Bereich von 0,1/1 bis 4,0/1 liegt;

(d) Entfernung des Ethanols aus der in Stufe (c) erhaltenen Suspension durch Verdampfung, um einen Feststoff zu isolieren;

(e) Umsetzung des in Stufe (d) erhaltenen Feststoffes mit mindestens einem Alkylaluminiumchlorid, wobei das Atomverhältnis von Chloratomen in dem Alkylaluminiumchlorid zu den Alkoxygruppen in der Titan-Verbindung im Bereich von 0,5/1 bis 7,0/1 liegt; und

(f) Isolierung der festen Katalysatorkomponente.

2. Verfahren nach Anspruch 1, in welchem in Stufe (a) eine Ethanol-Lösung mit einer Konzentration von Magnesiumchlorid von 1 bis 15 Gewichts-% hergestellt wird.

3. Verfahren nach irgendeinem der Ansprüche 1 und 2, in welchem in Stufe (b) mikrospheroidales Siliciumdioxid mit einer Teilchengröße von 10 bis 100 $\mu$m, einem $SiO_2$-Gehalt von > 90 Gewichts-%, einer Oberfläche von 250 bis 400 $m^2$/g, einem Porenvolumen im Bereich von 1,3 bis 1,8 ml/g und einem durchschnittlichen Durchmesser der Poren im Bereich von 20 bis 30 nm eingesetzt wird, wobei dieses Siliciumdioxid durch Erwärmen in einer inerten Atmosphäre bei einer Temperatur von 100 bis 650°C für 1 bis 20 Stunden oder durch Kontaktieren des Siliciumdioxids mit einer organometallischen Verbindung wie beispielsweise einer Alkylmagnesium- oder Alkylaluminium-Verbindung, vorzugsweise Butylmagnesium, Butyloctylmagnesium und/oder Triethylaluminium, wobei man bei Raumtemperatur oder erhöhten Temperaturen, vorzugsweise bei etwa 60°C, arbeitet, aktiviert worden ist.

4. Verfahren nach irgendeinem der Ansprüche 1 bis 3, in welchem in Stufe (b) 10 bis 20 Gewichtsteile Siliciumdioxid pro 100 Volumenteile der ethanolischen Lösung von Magnesiumchlorid suspendiert werden und der Kontakt bei einer Temperatur, die von Raumtemperatur auf den ungefähren Siedepunkt des Ethanols, vorzugsweise auf 50 bis 65°C, gebracht wurde, 0,5 bis 2,0 Stunden aufrechterhalten wird.

5. Verfahren nach irgendeinem der Ansprüche 1 bis 4, in welchem die in Stufe (c) verwendeten Titan-Verbindungen Alkoxide und/oder Chloralkoxide von Titan, die 1 bis 4 Kohlenstoffatome im Alkoxid-Teil enthalten, vorzugsweise aus Titantetra-n-propylat, Titantetra-n-butylat, Titantetra-i-propylat, Titantetra-i-butylat, den entsprechenden Titanmono- und -dichloralkoxiden und Mischungen davon ausgewählt sind.

6. Verfahren nach irgendeinem der Ansprüche 1 bis 4, in welchem in Stufe (c) eine Mischung von Titantetrachlorid und mindestens einem Titantetraalkoxid wie in Anspruch 5 definiert, wobei das Molverhältnis des ersteren zu letzterem vorzugsweise etwa 1/3 beträgt, verwendet wird.

7. Verfahren nach irgendeinem der Ansprüche 1 bis 6, in welchem das in Stufe (c) eingesetzte Siliciumhalogenid aus Siliciumtetrahalogeniden und Halogensilanen, vorzugsweise aus Siliciumtetrachlorid, Trichlorsilan, Vinyltrichlorsilan, Trichlorethoxysilan, Chlorethyltrichlorsilan und Mischungen davon, ausgewählt wird.

8. Verfahren nach irgendeinem der Ansprüche 1 bis 7, in welchem Stufe (c) mit einem Atomverhältnis von Magnesium zu Titan von 3,5/1 bis 8,5/1 und/oder einem Verhältnis der Siliciumatome zu den Alkoxygruppen von 0,5/1 bis 2,0/1 durchgeführt wird.

9. Verfahren nach irgendeinem der Ansprüche 1 bis 8, in welchem in Stufe (c) eine aus den entsprechenden Halogeniden, vorzugsweise Tetrachloriden, Alkoxiden und Halogen enthaltenden Alkoxiden, vorzugsweise Chloralkoxiden, ausgewählte Zirkonium- und/oder Hafnium-Verbindung in solchen Mengen zugegeben wird, daß ein Atomverhältnis von Titan zu Zirkonium und/oder Hafnium von 0,5/1 bis 2,0/1 resultiert.

10. Verfahren nach irgendeinem der Ansprüche 1 bis 9, in welchem die Arbeitstemperatur in Stufe (c) von Raumtemperatur bis 100°C für 0,5 bis 3 Stunden reicht und vorzugsweise etwa 60°C für etwa 1 Stunde beträgt.

11. Verfahren nach irgendeinem der Ansprüche 1 bis 10, in welchem in Stufe (d) das Ethanol mit Hilfe von Verdampfung bei atmosphärischem oder vermindertem Druck entfernt wird und der Feststoff 0,5 bis 2 Stunden vorzugsweise bei einer Temperatur von etwa 120°C und unter einem Druck von 5 bis 10 mm Hg getrocknet wird.

**12.** Verfahren nach irgendeinem der Ansprüche 1 bis 11, in welchem in Stufe (e) ein inertes KohlenwasserstoffLösungsmittel und eine Temperatur im Bereich von 10 bis 100°C 10 Minuten bis 24 Stunden eingesetzt werden.

**13.** Verfahren nach irgendeinem der Ansprüche 1 bis 12, in welchem das in Stufe (e) eingesetzte Alkylaluminiumchlorid aus Diethylaluminiumchlorid, Ethylaluminiumsesquichlorid, Diisobutylaluminiumchlorid, Isobutylaluminiumdichlorid und Mischungen davon ausgewählt wird und eine Temperatur von 20 bis 90°C 10 Minuten bis 1 Stunde lang eingesetzt wird.

**14.** Feste Katalysatorkomponente, erhältlich durch das Verfahren gemäß irgendeinem der Ansprüche 1 bis 13.

**15.** Feste Katalysatorkomponente nach Anspruch 14, die die folgenden Atomverhältnisse aufweist: Mg/Ti von 2,0/1 bis 12,1/1 und vorzugsweise von 3,5/1 bis 8,5/1; Cl/Ti von 10/1 bis 40/1 und vorzugsweise von 12/1 bis 36/1; Alkoxygruppen/Ti von 0/1 bis 20/1 und vorzugsweise von 2/1 bis 10/1; und einen Titangehalt von 0,5 bis 5,0 Gewichts-%, vorzugsweise 0,8 bis 2,0 Gewichts-%, bezogen auf das Gewicht der festen Komponente, zeigt.

**16.** Feste Katalysatorkomponente nach irgendeinem der Ansprüche 14 und 15, umfassend 55 bis 80 Gewichts-% Siliciumdioxid und 45 bis 20 Gewichts-% katalytisch aktiven Teil.

**17.** Feste Katalysatorkomponente nach irgendeinem der Ansprüche 14 bis 16, enthaltend Zirkonium und/oder Hafnium, wobei das Atomverhältnis von Titan zu Zirkonium und/oder Hafnium im Bereich von 0,5/1 bis 2,0/1 liegt.

**18.** Katalysator für die Homopolymerisation von Ethylen oder die Copolymerisation von Ethylen und einem oder mehreren alpha-Olefinen, umfassend die feste Katalysatorkomponente nach irgendeinem der Ansprüche 14 bis 17 und eine Aluminium-Verbindung als Cokatalysator, vorzugsweise ausgewählt aus Aluminiumtrialkylen und Alkylaluminiumchloriden, die 1 bis 5, insbesondere 2 bis 4 Kohlenstoffatome in den Alkylgruppen enthalten, wobei das Atomverhältnis von Aluminium in der Aluminium-Verbindung zu Titan in der festen Katalysatorkomponente vorzugsweise im Bereich von 20:1 bis 250:1, insbesondere von 100:1 bis 200:1, liegt.

**19.** Verfahren zur Homopolymerisation von Ethylen oder zur Copolymerisation von Ethylen und einem oder mehreren alpha-Olefinen, in welchem der Katalysator gemäß Anspruch 18 eingesetzt wird.

**Revendications**

**1.** Procédé de préparation d'un composant solide d'un catalyseur pour l'homopolymérisation de l'éthylène ou la copolymérisation de l'éthylène et d'une ou plusieurs alpha-oléfines comprenant un support de silice particulaire (50 à 90% en poids) et une partie catalytiquement active (50 à 10% en poids) comprenant titane, magnésium, chlore et groupes alcoxy, ledit procédé comprenant les étapes suivantes:
   (a) préparation d'une solution de chlorure de magnésium dans de l'éthanol;
   (b) imprégnation de la silice particulaire activée par utilisation de la solution préparée dans l'étape (a) en mettant les particules de silice en suspension dans ladite solution;
   (c) addition d'au moins un dérivé de titane choisi parmi les alcoxydes de titane et les alcoxydes de titane contenant un ou plusieurs atomes d'halogène, et un halogénure de silicium à la suspension de l'étape (b), le rapport atomique du magnésium dans le chlorure de magnésium au titane étant compris entre 2,0/1 et 12,1/1 et le rapport des atomes de silicium aux groupes alcoxy du dérivé de titane étant compris 0,1/1 et 4,0/1;
   (d) élimination de l'éthanol de la suspension obtenue dans l'étape (c) par évaporation, pour récupérer une matière solide;
   (e) mise en réaction de la matière solide obtenue dans l'étape (d) avec au moins un chlorure d'alkylaluminium, le rapport atomique des atomes de chlore dans le chlorure d'alkylaluminium aux groupes alcoxy du dérivé de titane étant compris entre 0,5/1 et 7,0/1; et
   (f) récupération du composant catalyseur solide.

**2.** Procédé selon la revendication 1, dans lequel, dans l'étape (a), on prépare une solution éthanolique avec une concentration de chlorure de magnésium comprise entre 1 et 15% en poids.

**3.** Procédé selon l'une quelconque des revendications 1 et 2, dans lequel, dans l'étape (b), on emploie une silice microsphéroïdale présentant une dimension particulaire comprise entre 10 et 100 $\mu$m, une teneur en $SiO_2$ supérieure à 90% en poids, une surface spécifique de 250 à 400 m²/g, un volume de pores compris entre 1,3 et 1,8 ml/g et un diamètre moyen de pores compris entre 20 et 30 nm, ladite silice étant activée par chauffage dans une atmosphère inerte à une température de 100 à 650°C pendant 1 à 20 heures, ou par mise de la silice en contact avec un dérivé organométallique tel qu'un dérivé d'alkylmagnésium ou d'alkylaluminium, de préférence bu-tylmagnésium, butyloctylmagnésium et/ou triéthylaluminium en opérant à la température ambiante ou à des températures élevées, de préférence à environ à 60°C.

**4.** Procédé selon l'une quelconque des revendications 1 à 3, dans lequel, dans l'étape (b), de 10 à 20 parties en poids de silice pour 100 parties en volume de la solution éthanolique de chlorure de magnésium, sont mises en suspension et le contact est maintenu à une température qui est portée de la température ambiante au point d'ébullition approximatif de l'éthanol, de préférence 50°C à 65°C pendant 0,5 à 2,0 heures.

**5.** Procédé selon l'une quelconque des revendications 1 à 4, dans lequel les dérivés du titane utilisés dans l'étape (c) sont des alcoxydes de titane et/ou chloralcoxydes de titane contenant de 1 à 4 atomes de carbone dans la partie alcoxyde, choisis de préférence parmi tétra-n-propylate de titane, tétra-n-butylate de titane, tétra-i-propylate de titane, tétra-i-butylate de titane, le mono- et dichloroalcoxydes correspondant de titane, et leurs mélanges.

**6.** Procédé selon l'une quelconque des revendications 1 à 4, dans lequel, dans l'étape (c), on utilise un mélange de tétrachlorure de titane et au moins un tétraalcoxyde de titane tel que défini dans la revendication 5, le rapport molaire du premier au dernier étant de préférence égal à environ 1/3.

**7.** Procédé selon l'une quelconque des revendications 1 à 6, dans lequel l'halogénure de silicium employé dans l'étape (c) est choisi parmi les tétrahalogénures de silicium et les halosilanes, de préférence parmi tétrachlorure de silicium, trichlorosilane, vinyltrichlorosilane, trichloroéthoxysil ane, chloroéthyltrichlorosilane et leurs mélanges.

**8.** Procédé selon l'une quelconque des revendications 1 à 7, dans lequel l'étape (c) est mise en oeuvre avec un rapport atomique du magnésium au titane compris entre 3,5/1 et 8,5/1 et/ou un rapport des atomes de silicium aux groupes alcoxy compris entre 0,5/1 et 2,0/1.

**9.** Procédé selon l'une quelconque des revendications 1 à 8, dans lequel un dérivé de zirconium et/ou de hafnium choisi parmi les halogénures correspondants, de préférence les tétrachlorures, alcoxydes et alcoxydes contenant un ou plusieurs atomes d'halogène, de préférence chloroalcoxydes, est ajouté dans l'étape (c) en quantités telles qu'il en résulte un rapport atomique du titane au zirconium et/ou à l'hafnium compris entre 0,5/1 et 2,0/1.

**10.** Procédé selon l'une quelconque des revendications 1 à 9, dans lequel la température à laquelle on opère dans l'étape (c) est comprise entre la température ambiante et 100°C pendant une durée de 0,5 à 3 heures et elle est de préférence d'environ 60°C pendant environ 1 heure.

**11.** Procédé selon l'une quelconque des revendications 1 à 10, dans lequel, dans l'étape (d), l'éthanol est éliminé par évaporation à pression atmosphérique ou à pression réduite et le solide est séché pendant 0,5 à 2 heures, de préférence à une température d'environ 120°C et à une pression de 5 à 10 mm de mercure.

**12.** Procédé selon l'une quelconque des revendications 1 à 11, dans lequel, dans l'étape (e), on utilise un solvant hydrocarboné inerte et à une température comprise entre 10 et 100°C pendant une durée de 10 minutes à 24 heures.

13. Procédé selon l'une quelconque des revendications 1 à 12, dans lequel le chlorure d'alkylaluminium employé dans l'étape (e) est choisi parmi chlorure de diéthylaluminium, sesquichlorure d'éthylaluminium, chlorure de diisobutylaluminium, dichlorure d'isobutylalumini um et leurs mélanges et on emploie une température de 20 ° C à 90 ° C pendant une durée de 10 minutes à 1 heure.

14. Composant catalyseur solide susceptible d'être obtenu par le procédé selon l'une quelconque des revendications 1 à 13.

15. Composant catalyseur solide selon la revendication 14, présentant les rapports atomiques suivants: Mg/Ti 2,0/1 à 12,1/1 et de préférence de 3,5/1 à 8,5/1; Cl/Ti de 10/1 à 40/1 et de préférence 12/1 à 36/1; groupes alcoxy/Ti de 0/1 à 20/1 et de préférence 2/1 à 10/1; et présentant une teneur en titane de 0,5 à 5,0% en poids, de préférence 0,8 à 2,0% en poids par rapport au poids dudit composant solide.

16. Composant catalyseur solide selon l'une quelconque des revendications 14 et 15, comprenant de 55 à 80% en poids de silice et de 45 à 20% en poids d'une partie catalytiquement active.

17. Composant catalyseur solide selon l'une quelconque des revendications 14 à 16, contenant du zirconium et/ou de l'hafnium, le rapport atomique du titane au zirconium et/ou à l'hafnium étant compris entre 0,5/1 et 2,0/1.

18. Catalyseur pour l'homopolymérisation de l'éthylène ou la copolymérisation de l'éthylène et d'une ou de plusieurs alpha-oléfines comprenant le composant catalyseur solide selon l'une quelconque des revendications 14 à 17 et un dérivé d'aluminium comme cocatalyseur, choisi de préférence parmi les trialkylaluminium et les chlorures d'alkylaluminium contenant de 1 à 5, en particulier de 2 à 4 atomes de carbone dans les groupes alkyles, le rapport atomique de l'aluminium dans le dérivé aluminium au titane dans le composant catalyseur solide étant de préférence compris entre 20/1 et 250/1, en particulier 100/1 et 200/1.

19. Procédé pour l'homopolymérisation de l'éthylène ou la copolymérisation de l'éthylène et d'une ou de plusieurs alpha-oléfines dans lequel on utilise le catalyseur selon la revendication 18.